# EUROPÄISCHE PATENTANMELDUNG

(11) **EP 1 148 069 A1**
(43) Veröffentlichungstag der Anmeldung: **24.10.2001**
(21) Anmeldenummer: 01107844.1
(22) Anmeldetag: 09.04.2001
(51) Int. Cl.: C08F 8/12

(54) **Verfahren zur Herstellung von superabsorbierenden Polymeren aus Polyacrylnitril-Fällungspolymerisaten**

(30) Priorität: 20.04.2000 DE 10019757
(71) Anmelder: BAYER AG, 51368 Leverkusen (DE)
(72) Erfinder: Michels, Gisbert Dr., 51375 Leverkusen (DE); Sackmann, Günter Dr., 51379 Leverkusen (DE); Struss, Klaus Dr., 51375 Leverkusen (DE)

(57) **Zusammenfassung**

Die Erfindung bezieht sich auf ein Verfahren zur Herstellung von superabsorbierenden Polymeren (SAP) durch alkalische Hydrolyse von Polyacrylnitril-Fällungspolymerisaten (PAN-Fällungspolymerisat+).

## Beschreibung

Die Erfindung betrifft ein Verfahren zur Herstellung von superabsorbierenden Polymeren (SAP) durch alkalische Hydrolyse von Polyacrylnitril-Fällungspolymerisaten (PAN-Fällungspolymerisat).

Superabsorbierende Polymerisate sind bekannt und werden hauptsächlich bei der Herstellung von Windeln und Inkontinenzartikeln, aber auch als wasserspeichernde Materialien in der Landwirtschaft sowie bei der Ummantelung von Elektrokabeln verwendet. In der Regel handelt es sich bei diesen superabsorbierenden Polymerisaten um weitmaschig vernetzte, wasserunlösliche Polymerisate oder Copolymerisate auf Basis von Alkalisalzen der Polyacrylsäure oder Copolymerisate von Akalisalzen der Acrlysäure und Acrylamid, die durch radikalisch initiierte Copolymerisation von Acrylsäure und polyfunktionellen Monomeren, wie Divinylbenzol, Ethylenglykoldimethacrylat, Ethylenglykoldiallylether, Butandioldiacrylat, Hexandioldimethacrylat, Polyglykoldiacrylat, Trimethylolpropan-diacrylat, Allylacrylat, Diallylacrylamid, Trisallylamin, Diallylether, Methylenbisacrylamid und N-Methylolacrylamid, erhalten werden. Aufgrund ihrer Struktur sind solche Polymerisate in der Lage, unter Quellung und Ausbildung von Hydrogelen große Mengen an Wasser und wässrigen Lösungen aufzunehmen und diese auch unter Druck festzuhalten.

Aus DE-A 44 06 951, DE-A 44 29 318, DE-A 196 00 163, DE-A 196 46 856 und EP-A 936 223 sind Verfahren zur Herstellung von SAP bekannt, wobei all diesen Anmeldungen gemeinsam ist, dass durch alkalische Hydrolyse von feinteiligen Polyacrylnitril-Emulsionen (PAN-Emulsionen) superabsorbierende Polymere entstehen.

Bei den oben genannten Verfahren werden PAN-Emulsionen verwendet, die nur durch Einsatz eines speziellen Emulgators, der in DE-A 42 33 026 beschrieben ist, herstellbar sind; ohne den Einsatz dieses Emulgators ist die Herstellung von PAN-Emulsionen bisher kaum wirtschaftlich möglich. Der Einsatz dieses speziellen Emulgators ist jedoch aus ökonomischen und qualitativen Gründen nachteilig. Die Qualität der Superabsorber wird verschlechtert, da der Emulgator wasserlöslich bzw. -dispergierbar ist.

Die naheliegende Lösung, nämlich PAN-Fällungspolymerisate als Rohstoff einzusetzen, ist nicht möglich wie DE-A 44 06 951 und DE-A 44 29 318 lehren:
"Auch die saure oder alkalische Hydrolyse von Polyacrylnitril führt zu Polymeren mit Carboxyl- bzw. Carboxylatgruppen. Diese sind in der Regel wasserlöslich (und daher nicht quellbar), denn das als Ausgangsprodukt eingesetzte und durch Fällungspolymerisation gewonnene Polyacrylnitril hat ein zu niedriges Molekulargewicht."

Aufgabe der Erfindung war es deshalb, einen Rohstoff auf Basis Polyacrylnitril statt der feinteiligen PAN-Emulsionen zu finden, der ohne Einsatz der oben genannten speziellen Emulgatoren nach DE-A 42 33 026 herstellbar ist, und der nach alkalischer Hydrolyse und gegebenenfalls weiteren Schritten hervorragende SAP-Eigenschaften besitzt.

Gegenstand der Erfindung ist ein Verfahren zur Herstellung von SAP, das folgende Teilschritte enthält:
a) Herstellung der PAN-Fällungspolymerisate, vorzugsweise unvernetzte oder vernetzte Homopolymerisate des Acrylnitrils
b) Alkalische Hydrolyse der PAN-Fällungspolymerisate, vorzugsweise in selbstreinigenden, für hochviskose Medien geeigneten Reaktoren,
c) optional eine Neutralisation des Hydrolysats, falls erforderlich und gewünscht:
   1. Zugabe von Säure zum Hydrolyseprodukt oder
   2. Zugabe des Hydrolyseproduktes zu einem Wasser/Säuregemisch zur Einstellung des pH-Wertes oder
   3. Zugabe des Hydrolyseproduktes zu einem Alkohol/Wasser/Säuregemisch zur Einstellung des pH-Wertes,
d) Trocknen des wasserhaltigen, gelförmigen Produktes,
e) Mahlen auf die gewünschte Korngröße,
f) Oberflächenmodifikation des kornförmigen SAP

In der vorliegenden Erfindung werden somit statt der PAN-Emulsionen hochmolekulare PAN-Fällungspolymerisate eingesetzt.

Aus DE-A 196 00 163 ist bereits bekannt, dass durch Hydrolyse von feinteiligen PAN-Emulsionen SAP herstellbar sind. Es wird beschrieben, dass superabsorbierende Polymerisate aus PAN-Emulsionen kontinuierlich und reproduzierbar aus konzentrierten Emulsionen hergestellt werden können, wenn man für die alkalische Hydrolyse der PAN-Emulsion selbstreinigende Reaktoren mit für eine Verweilzeit von 0,5 bis 2 Stunden ausreichendem Volumen einsetzt.

Weiterhin wird beschrieben, dass zur Herstellung von superabsorbierenden Polymeren durch Hydrolyse von PAN-Emulsionen besonders solche Geräte geeignet sind, die längere Verweilzeiten bei hinreichend guter Vermischung und gutem Wärmeübergang bei gleichzeitiger Abführung des während der Hydrolyse entstehenden gasförmigen Ammoniaks erlauben. Besonders geeignet sind sogenannte "List-Reaktoren" (Hersteller: Firma List AG, CH-4422 Arisdorf, Schweiz) mit bis zu 16,5 m³ freiem Volumen, die als Einwellen- und Zweiwellengeräte gebaut werden und spezielle Misch- und Abstreiforgane sowohl auf der Welle als auch im Reaktorgehäuse besitzen. Solche Reaktoren können auch hintereinander geschaltet werden, wodurch eine große Flexibilität beim Einsatz erreicht werden kann.

Nach Beendigung der Hydrolyse kann nach DE-A 196 00 163 das Reaktionsgemisch direkt aus dem List-Reaktor in einen mit einem schnelllaufenden Rührer ausgestatteten Fällungsreaktor, der einen niedrigsiedenden Alkohol, z. B. Methanol oder Ethanol, enthält, kontinuierlich eingetragen werden. Dabei fällt das superabsorbierende Polymerisat als feines, leicht filtrierbares Pulver aus. Nach dem Trocknen und Mahlen auf die gewünschte Korngröße liegt dann der fertige Superabsorber vor.

Weiterhin wird beschrieben, dass zur Neutralisation des nicht verbrauchten Alkalihydroxids bzw. zur Einstellung des pH-Wert des Endproduktes eine Säure zugesetzt werden muss, um den für einen Einsatz in Hygieneartikel, z.B. Babywindeln oder Inkontinenzartikel für Erwachsene, erforderlichen pH-Wert ≤ 7 zu erhalten.

Es ist jedoch auch prinzipiell möglich, wie in DE-A 19 646 856 beschrieben, die Hydrolyse in einem Wasser/Alkohol-Gemisch in Rührbehältern durchzuführen.

Weiterer Gegenstand der vorliegenden Anmeldung sind Superabsorber hergestellt gemäß dem erfindungsgemäßen Verfahren.

Weiterer Gegenstand ist weiterhin die Verwendung der erfindungsgemäßen Superabsorber zur Herstellung von Windeln, Inkontinenzartikeln, wasserspeichernden Materalien und Elektrokabelummantelungen.

Weiterer Gegenstand sind weiterhin Windeln, Inkontinenzartikel, wasserspeichernde Materialien und Elektrokabelummantelungen, hergestellt nach dem erfindungsgemäßen Verfahren.

Die hochmolekularen PAN-Fällungspolymerisate nach Teilschritt a) sind nach dem bekannten Stand der Technik herstellbar, siehe hierzu bspw. Houben-Weyl, Methoden der organischen Chemie, E20, S. 1208-1216, Georg Thieme Verlag, Stuttgart. Die Molekulargewichte (Gewichtsmittel) der unvernetzten PAN-Fällungspolymerisate liegen zwischen 5*10⁵ bis 1*10⁷ g/mol, die Staudingerindizes, gemessen in Dimethylformamid mit einem Zusatz von 1 g/L LiBr, sind größer 2, bevorzugt größer 4 dL/g. Bevorzugte PAN-Fällungspolymerisate sind unvernetzte oder vernetzte Homopolymerisate des Acrylnitrils. Vernetzte PAN-Fällungspolymerisate enthalten einpolymerisierte polyfunktionelle Monomere, wie z.B. in DE-A 42 33 026 beschrieben oder Divinylether, ohne dass die folgende Aufzählung eine Einschränkung darstellt, wie z.B. Diethylenglykoldivinylether, Ethylenglykoldivinylether, Butandioldivinylether, von 0,01 bis 4,0 Gew.-% bezogen auf die Gesamtmonomermenge.

Nach Teilschritt b) werden die flüssigen Edukte (in Wasser dispergierte PAN-Fällungspolymerisate und wässrige Alkalihydroxidlösung) gemischt und die Hydrolyse in selbstreinigenden, für hochviskose Medien geeignete Reaktoren (HV-Reaktor) durchgeführt. Bei der Hydrolyse entstehen hochviskose Gele mit einem Feststoffgehalt von 10 bis 70 Gew.-%. Geeignete HV-Reaktoren besitzen eine gute Misch- und Knetwirkung für das entstehende hochviskose Gel, einen guten Wärmeübergang und erlauben eine Abführung des bei der Hydrolyse entstehenden Ammoniaks. Besonders geeignete HV-Reaktoren sind die der Fa. List AG, CH-4422 Arisdorf, Schweiz, die als Ein- und Zweiwellengeräte gebaut werden und Misch- und Abstreiforgane sowohl auf der Welle als auch im Reaktorgehäuse besitzen.

Die Hydrolyse kann nach Vermischen der Edukte im Batchverfahren, im semi-kontinuierlichen Verfahren durch Dosierung eines oder beider Edukte oder im kontinuierlichen Verfahren hergestellt werden. Auch bei einem kontinuierlichen Verfahren ist es möglich, die Edukte zu Beginn des Prozesses oder teilweise später im Prozess zu dosieren. Es ist möglich einen oder mehrere hintereinander geschaltete HV-Reaktoren einzusetzen. Die Vermischung der Edukte kann im HV-Reaktor oder vorgeschalteten Apparaten, wie z.B. Rohrleitungen, Statikmischern, aber auch einem vorgeschalteten HV-Reaktor, der überwiegend Mischaufgaben hat, oder in Schnecken-Knet-Maschinen durchgeführt werden.

Bei der Hydrolyse der PAN-Fällungspolymerisate mit wässrigen Alkalihydroxidlösungen beträgt das molare Verhältnis der Nitrilgruppen des Polymeren zum Alkalihydroxid 1:1 bis 1:0,05, bevorzugt 1:0,9 bis 1:0,1, besonders bevorzugt 1:0,7 bis 1:0,3. Alkalihydroxide sind bevorzugt NaOH oder KOH oder deren Mischungen. Die Hydrolyse wird bei 80 bis 200°C, bevorzugt über 100 bis 160°C unter Überdruck ausgeführt. Die Reaktionszeiten betragen 0,01 bis 10 Stunden. Das bei der Hydrolyse entstehende gasförmige Ammoniak wird aus dem Reaktor entfernt und in Wasser gelöst oder bei tiefen Temperaturen kondensiert. Zur möglichst vollständigen Entfernung des Ammoniaks aus dem Hydrolyseprodukt ist es günstig, neben Ammoniak zusätzlich Wasser aus dem Reaktor zu verdampfen. Der dadurch entstandene Verlust an Wasser kann durch Zudosieren von Wasser (flüssig oder dampfförmig) kompensiert werden. Es ist aber auch möglich den entstanden Verlust nicht zu kompensieren, so dass der Feststoffgehalt des Hydrolyseproduktes entsprechend steigt.

Bei der Hydrolyse entstehen teilhydrolysierte Polymere, bei denen 30 bis 80 Mol-% der Nitrilgruppen des PAN-Polymers in Carboxylatgruppen und 20 bis 70 Mol-% in Carbonamidgruppen umgewandelt sind und 0 bis 20 Mol-% der Nitrilgruppen unverändert bleiben. Der pH-Wert der Hydrolyseprodukte, gemessen als 0,1 gew.-%ige Lösung in 0,9 gew.-%iger NaCl-Lösung liegt im Bereich von 8,0, bevorzugt von 7,5 bis 7,1.

Nach Teilschritt c) wird optional zur Einstellung des pH-Wertes auf einen Bereich von 7,0, bevorzugt von 6,5 bis 5,5, gemessen als 0,1 gew.-%ige Lösung in 0,9 gew.-%iger NaCl-Lösung, dem Hydrolyseprodukt nach beendeter Hydrolyse eine Säure zugesetzt (gemäß c1.)) bzw. das Hydrolyseprodukt kurzzeitig in ein Wasser/Säuregemisch geleitet (gemäß c2.)) oder das Hydrolyseprodukt kurzzeitig in ein Alkohol/Wasser/Säuregemisch geleitet (gemäß c3.)). Geeignete Säuren sind Mineralsäuren, wie z.B. Salzsäure, Schwefelsäure, Phosphorsäure, Salpetersäure, Carbonsäuren, z.B. Ameisensäure, Essigsäure, Propionsäure, Adipinsäure, Milchsäure, Zitronensäure, polymere Säuren, z.B. Polyacrylsäure, Polyacrylsäure-copolymerisate, Polystyrolsulfonsäure sowie Mischungen der vorgenannten Säuren. Polymere Säuren können in vernetzter oder unvernetzter Form eingesetzt werden.

Die Menge an zugesetzter Säure beim Teilschritt c1.) richtet sich nach dem für die Anwendung gewünschten pH-Wert einerseits und der Säurestärke der Säure andererseits. Die Menge an zugesetzter Säure beträgt deshalb 0,1 bis 20 Gew.-%, bevorzugt 0,1 bis 10 Gew.-% bezogen auf das Trockengewicht des Hydrolyseproduktes. Die durch die Zugabe der Säure entstehenden Alkalisalze verbleiben im Produkt. Die Säure kann mit dem hochviskosen Hydrolyseprodukt in geeigneten Mischern, wie z.B. Statikmischern, Schnecken-Knetmaschinen, Knetern, kontinuierlich oder diskontinuierlich vermischt werden.

Die Menge an zugesetzter Säure beim Teilschritt c2.) oder c3.) richtet sich nach dem für die Anwendung gewünschten pH-Wert einerseits und der Säurestärke der Säure andererseits. Die Menge an zugesetzter Säure beträgt deshalb 0,1 bis 20 Gew.-%, bevorzugt 0,1 bis 10 Gew.-% bezogen auf das Trockengewicht des Hydrolyseproduktes. Die Säure wird in der 1,0 bis 100-fachen Menge an Wasser oder Alkohol/Wasser, bevorzugt 1,5 bis 30fachen Menge an Wasser oder Alkohol/Wasser bezogen auf das Gewicht des zu neutralisierenden SAP-Gels gelöst. Die Verweilzeit des Hydrolysats in dem Wasser/Säuregemisch oder Alkohol/Wasser/Säuregemisch liegt zwischen 5s und 30min, bevorzugt zwischen 10s und 5min. Die Neutralisation des Hydrolyseproduktes nach Teilschritt c2.) oder c3.) kann sowohl batchweise als auch kontinuierlich durchgeführt werden.

Das nach Teilschritt c) erhaltene wasserhaltige, gelförmige Produkt wird nach Teilschritt d) getrocknet. Geeignete Trocknungsverfahren sind nach dem Stand der Technik beschrieben in "Modern Superabsorbent Polymer Technology", Hrsg. F.L. Buchholz, A.T. Graham, Wiley-VCH, New York, 1998, ISBN 0-471-19411-5, Kapitel 3.2.4.2. Post-Reactor Gel Preperation, S. 85-87 und 3.2.5. Drying, S. 87-93 und der dort zitierten Literatur.

In Teilschritt e) wird das getrocknete Produkt nach dem Stand der Technik gemahlen und klassiert; siehe hierzu: "Modern Superabsorbent Polymer Technology", Hrsg. F.L. Buchholz, A.T. Graham, Wiley-VCH, New York, 1998, ISBN 0-471-19411-5, Kapitel 3.2.6. Handling of the Dried Material: Particle Sizing, S. 93-95. Die Teilchengrößenverteilung des gemahlenen und klassierten SAP soll im Bereich von 100 bis 1000 µm, bevorzugt 150 bis 850 µm liegen.

Zur Verbesserung der Absorptionseigenschaften, insbesondere zur Vermeidung von Gel-blocking, das beim Einsatz der SAP in Hygieneartikeln, wie z.B. Babywindeln, zu einer niedrigen Anfangstransportgeschwindigkeit der aufzunehmenden Flüssigkeit und einem schlechten Flüssigkeitstransport führt, und zu einer Verbesserung der Absorbancy Under Load (AUL), d.h. einer Absorption unter hoher Druckbelastung von bspw. 0,7 psi, muss eine Oberflächenvernetzung bzw. -modifizierung, Teilschritt f), der komförmigen SAP durchgeführt werden.

Hierzu eignen sich bekannte Modifizierungsmittel wie z.B. Di- oder Polyole, z.B. Ethylenglykol, 1,2-Propandiol, Glycerin, weiterhin Ethylencarbonat, Diglycidylverbindungen wie z.B. Ethylenglykoldiglycidylether oder Di- oder Polyisocyanate oder deren Mischungen.

Die nach dem erfindungsgemäßen Verfahren erhältlichen SAP eignen sich hervorragend für den Einsatz bei der Herstellung von Hygieneartikeln, wie z.B. Babywindeln, Inkontinenzartikeln für Erwachsene und Frauenhygiene, zur Ummantelung von Elektrokabeln, für den Einsatz als wasserspeichemde Materialien in der Landwirtschaft und für den Verpackungsbereich von auslaufgefährdeten Gütern.

Zur Charakterisierung der Produkte wird die Retention (gemäß EDANA 441.0-96), AUL bei 0,3 psi (gemäß EDANA 442.0-96).

### Beispiel A: Herstellung der hochmolekularen PAN-Fällungspolymerisate

Die Herstellung des PAN-Fällungspolymerisates erfolgte in einem Planschliffgefäß mit 4L Volumen, Wendelrührer 150 Upm, bei 60°C. Folgende Dosierlösungen kamen zum Einsatz (alle Angaben in [g]):

| Lösung I: | |
|---|---|
| Acrylnitril | 591,5 |
| Diethylenglykoldivinylether | 0,885 |

| Lösung II: | |
|---|---|
| Wasser (entionisiert) | 717,6 |
| FeSO₄*7H₂O (0,1%-ige Lösung) | 62,4 |
| MgSO₄*7H₂O | 39,0 |

| Lösung III: | |
|---|---|
| Wasser (entionisiert) | 773,5 |
| H₂SO₄ | 19,5 |
| Na-Persulfat | 0,36 |

| Lösung IV: | |
|---|---|
| Wasser (entionisiert) | 778,0 |
| Na-Disulfit | 0,73 |

Es wurden 15 % der Lösungen I-IV nacheinander vorgelegt. Nach Erreichen der Innentemperatur von 60°C wurden die restlichen Lösungen innerhalb 6 h dosiert; es wurde 0,5 h nachgerührt. Nach Filtration, Waschen mit Wasser und Trocknung wurde das PAN-Fällungspolymer in einer Ausbeute von 282 g erhalten. Für die Hydrolyse wurde das Material in der erforderlichen Menge Wasser dispergiert.

### Beispiel 1

Die alkalische Hydrolyse des PAN-Fällungspolymerisates wurde in einem HV-Reaktor der Fa. List (List-CRP 2.5 Batch-Reaktor: zweiwellig, mit Austragsschnecke, 2,5 L Reaktionsvolumen) durchgeführt.

Die Edukte (in Wasser dispergiertes PAN-Fällungspolymer, hergestellt nach Beispiel A in der erforderlichen Menge, Natronlauge, E-Wasser) wurden bei Raumtemperatur in den Reaktor eingefüllt und mit konstanter Drehzahl von 20 Upm vermischt. Der Reaktor wurde stufenweise aufgeheizt (ca. 100°C) und das entstehende Ammoniak-Wasser-Gemisch über ein Nadelventil in eine Schwefelsäurevorlage entspannt. Nach vollständiger Ammoniakentwicklung wurde ca. 500 g Wasser abdestilliert und gleichzeitig durch frisches Wasser ersetzt, um den Ammoniakgehalt im gelförmigen SAP zu senken. Nach Abkühlen auf <60°C wurde das viskose, gelartige, schwach gelbe bis farblose Produkt von der Austragsschnecke über eine Düsenplatte mit 3 mm Bohrungen ausgetragen (Hydrolysebedingungen: s. Tab. 1). Es wurde der Feststoff bestimmt.

Das Gel wurde in einem Labortrockenschrank bei 110-115°C getrocknet, mit einer Labormühle gemahlen und auf eine Teilchengröße von 100-800 µm fraktioniert. Die Oberflächenmodifikation wurde mit einer Lösung aus Glycerin, 2-Propandiol und Wasser im Verhältnis 1:1:1 durchgeführt. Hierzu wurden in einem Becherglas 100 Tle. SAP-Pulver vorgelegt, mit 6 Tle. der oben genannten Lösung besprüht und vermischt und anschließend für 2h bei 215°C in einem Trockenschrank zur Reaktion gebracht (s. Tab.2).

### Beispiel 2 (Vergleichsbeispiel, nicht erfindungsgemäß)

Die alkalische Hydrolyse der PAN-Emulsionen wurde in einem HV-Reaktor der Fa. List (List-CRP 2.5 Batch-Reaktor: zweiwellig, mit Austragsschnecke, 2,5 L Reaktionsvolumen) durchgeführt.

Die PAN-Emulsion wurde nach DE-A 42 33 026, Bsp. 8 hergestellt. Es handelt sich hierbei um ein unvernetztes Polyacrylnitrilhomopolymerisat, der Anteil des eingesetzten polymeren Emulgators betrug im Gegensatz zu DE-A 42 33 026, Bsp. 8 nur 2,5 Gew.-% bezogen auf Polyacrylnitril und der Feststoff der Emulsion betrug 32,68 Gew.-%.

Die Edukte (PAN-Emulsion, Natronlauge, E-Wasser) wurden bei Raumtemperatur in den Reaktor eingefüllt und mit konstanter Drehzahl von 20 Upm vermischt. Der Reaktor wurde stufenweise aufgeheizt (ca. 100°C) und das entstehende Ammoniak-Wasser-Gemisch über ein Nadelventil in eine Schwefelsäurevorlage entspannt. Nach vollständiger Ammoniakentwicklung wurde ca. 500 g Wasser abdestilliert und gleichzeitig durch frisches Wasser ersetzt, um den Ammoniakgehalt im gelförmigen SAP zu senken. Nach Abkühlen auf <60°C wurde das viskose, gelartige, schwach gelbe bis farblose Produkt von der Austragsschnecke über eine Düsenplatte mit 3 mm Bohrungen ausgetragen (Hydrolysebedingungen: s. Tab. 1). Es wurde der Feststoff bestimmt.

Das Gel wurde in einem Labortrockenschrank bei 110-115°C getrocknet, mit einer Labormühle gemahlen und auf eine Teilchengröße von 100-800 µm fraktioniert. Die Oberflächenmodifikation wurde mit einer Lösung aus Glycerin, 2-Propandiol und Wasser im Verhältnis 1:1:1 durchgeführt. Hierzu wurden in einem Becherglas 100 Tle. SAP-Pulver vorgelegt, mit 6 Tle. der oben genannten Lösung besprüht und vermischt und anschließend für 2h bei 215°C in einem Trockenschrank zur Reaktion gebracht (s. Tab.2).

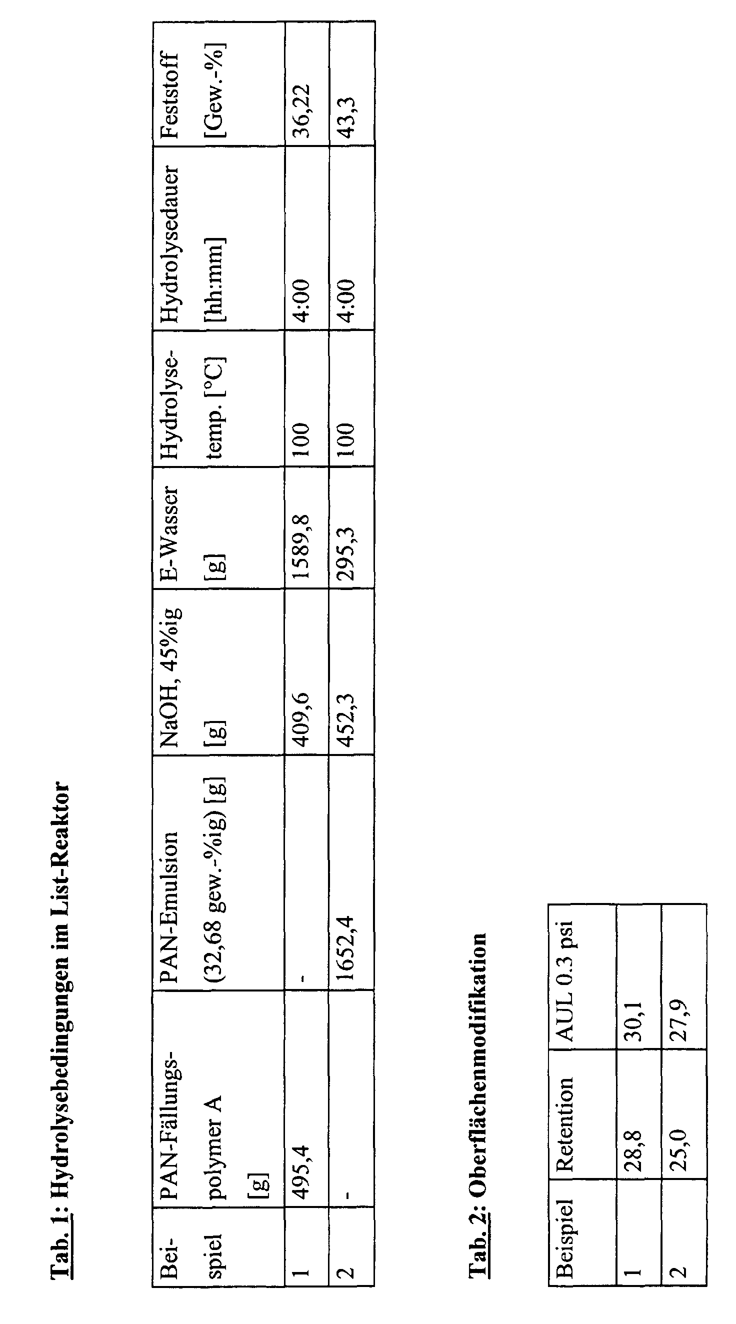

## Patentansprüche

1. Verfahren zur Herstellung von Superabsorbem, **dadurch gekennzeichnet, dass** Polyacrylnitril-Fällungspolymerisate bei der alkalischen Hydrolyse eingesetzt werden.

2. Verfahren gemäß Anspruch 1, wobei die Teilschritte
a) Herstellung von Polyacrylnitril-Fällungspolymerisaten und
b) alkalische Hydrolyse der Polyacrylnitril-Fällungspolymerisate, vorzugsweise in selbstreinigenden, für hochviskose Medien geeigneten Reaktoren,
enthalten sind.

3. Verfahren gemäß Anspruch 2, wobei zusätzlich die Verfahrensschritte
d) Trocknen des Produktes und
e) Mahlen
enthalten sind.

4. Verfahren gemäß einem oder mehreren der vorangegangenen Ansprüche, wobei zusätzlich ein Verfahrensschritt
f) Oberflächenmodifikation des Superabsorbers
enthalten ist.

5. Verfahren gemäß einem oder mehreren der vorangegangenen Ansprüche, wobei zusätzlich eine Neutralisation des Hydrolysats (Verfahrensschritt c)) durch
1. Zugabe von Säure zum Hydrolyseprodukt oder
2. Zugabe des Hydrolyseproduktes zu einem Wasser/Säuregemisch zur Einstellung des pH-Wertes oder
3. Zugabe des Hydrolyseproduktes zu einem Alkohol/Wasser/Säuregemisch zur Einstellung des pH-Wertes
durchgeführt wird.

6. Verfahren gemäß einem oder mehreren der vorangegangenen Ansprüche, wobei als Polyacrylnitril-Fällungspolymerisate unvernetzte oder vernetzte Homopolymerisate des Acylnitrils bei der alkalischen Hydrolyse eingesetzt werden.

7. Verfahren gemäß einem oder mehreren der vorangegangenen Ansprüche, wobei das unvernetzte PAN-Fällungspolymerisat Molekulargewichte (Gewichtsmittel) von 5·10⁵ bis 1·10⁷ g/mol und Staudingerindizes, (gemessen in Dimethylformamid mit einem Zusatz von 1 g/L LiBr) größer als 2 aufweist.

8. Verfahren gemäß einem oder mehreren der vorangegangenen Ansprüche, wobei in Verfahrensschritt b) hochviskose Gele mit einem Feststoffgehalt von 10 bis 70 Gew.-% entstehen.

9. Verfahren gemäß einem oder mehreren der vorangegangenen Ansprüche, wobei im Verfahrensschritt e) die Teilchengrößenverteilung der gemahlenen und klassierten Superabsorper im Bereich von 100 bis 1000 µm liegt.

10. Superabsorber, hergestellt gemäß einem oder mehrerer der vorangegangenen Ansprüche.

11. Verwendung der Superabsorber gemäß Anspruch 10 zur Herstellung von Windeln, Inkontinenzartikeln, wasserspeichernden Materialien und Elektrokabelummantelungen.

12. Windeln, Inkontinenzartikeln, wasserspeichernden Materialien und Elektrokabelummantelungen, hergestellt gemäß einem oder mehreren der vorangegangenen Ansprüche.
